# EUROPÄISCHE PATENTSCHRIFT

(11) **EP 1 225 018 B1**
(45) Veröffentlichungstag und Bekanntmachung des Hinweises auf die Patenterteilung: **01.06.2005**
(21) Anmeldenummer: 01128388.4
(22) Anmeldetag: 03.12.2001
(51) Int. Cl.: B29B 7/90, B29C 70/00, C08J 5/08, B29C 67/24, B29B 7/60, B01F 15/04

(54) **Verfahren und Vorrichtung zum Herstellen von füllstoffhaltigen Formteilen**
Process and apparatus for the production of filler-containing moulded parts
Procédé et dispositif pour la production de pièces moulées comprenant des charges

(30) Priorität: 14.12.2000 DE 10062420
(43) Veröffentlichungstag der Anmeldung: 24.07.2002
(73) Patentinhaber: Hennecke GmbH, 51379 Leverkusen (DE)
(72) Erfinder: Napp, Reiner, 53229 Bonn (DE); Althausen, Ferdinand, 53819 Neunkirchen (DE); Pawlik, Wolfgang, 50735 Köln (DE)
(74) Vertreter: Feldhues, Michael L.F., Dr.

(56) Entgegenhaltungen:
- US-A- 4 571 319
- US-A- 5 464 585

## Beschreibung

Die Erfindung betrifft ein Verfahren und eine Vorrichtung zum Herstellen von Füllstoff-haltigen Formteilen aus einem fließfähigen Reaktionsgemisch, wobei mindestens zwei fließfähige chemische Reaktionskomponenten, von denen mindestens eine Füllstoff enthält, durch Vermischung zur Reaktion gebracht werden, wobei das fließfähige Reaktionsgemisch in ein Formwerkzeug eingebracht wird, dort ausreagiert, und wobei das Formteil anschließend entformt wird.

Es ist allgemein bekannt, Füllstoff-haltige Formteile aus Polyurethan durch Reaktionsvermischung von Polyol und Isocyanat, wovon mindestens eine dieser Reaktionskomponenten Füllstoff enthält, dadurch herzustellen, dass man das erzeugte Reaktionsgemisch in ein Formwerkzeug einbringt, aushärten lässt und nachher entformt.

Als chemische Reaktionskomponenten werden beispielsweise Isocyanate und Polyole verwendet. Als Füllstoff kommen bevorzugt Fasern in Frage, wie z.B. Glasfasern, Kohlefasern oder auch Naturfasern, z.B. Jute- oder Hanffasern. Aber auch körnige und pulvrige Stoffe, wie z.B. Recyclate, Melamin oder Kreide, können verwendet werden (Dantel G. (Hrsg.), Handbuch Polyurethane, Hauser Verlag, 1983, S. 106).

Solche Formteile werden heute in der Regel auf größeren Anlagen hergestellt. Von Vorratsbehältern mit Rührwerken führen Leitungen über Dosiervorrichtungen zu Mischvorrichtungen, welche z.B. in einer sogenannten Mehrstellendosierung jeweils einem Formwerkzeug zugeordnet sind, wobei auf je einem stationären Formwerkzeugträger ein oder zwei solcher Formwerkzeuge angeordnet sind.

Dabei ist es häufig nötig, auf der gleichen Anlage Formteile gleicher oder auch anderer Gestalt herzustellen, welche aber unterschiedlichen Füllstoffgehalt aufweisen.

Hierfür wird in einem Vorratsbehälter ein Batch aus einer Reaktionskomponente und Füllstoff entsprechender Menge hergestellt.

Die Umstellung von einer Serie von Formteilen auf eine solche mit einem anderen Füllstoffgehalt erfordert dann die Herstellung eines neuen Batch und die Reinigung der Anlage von der bisherigen Füllstoff-haltigen Reaktionskomponente. Dies bedeutet Ausfall von Produktionszeit durch die für die Umstellung erforderliche Zeit sowie Materialverlust.

US-A-4,571,319 offenbart ein Verfahren zur Herstellung von Polyurethan-Formteilen, die verschiedene tonen unterschiedliches Zusammensetzung haben. In dem Verfahren gemäß US-A-4,571,319 werden jedoch keine füllstoffhaltigen komponenten eingesetzt.

Es ist Aufgabe der Erfindung, eine Möglichkeit zu schaffen, bei der Herstellung von Füllstoff-haltigen Formteilen die Umstellung auf einen anderen Füllstoffgehalt schneller und möglichst ohne Materialverlust vornehmen zu können.

Diese Aufgabe wird dadurch gelöst, dass mindestens eine der Reaktionskomponenten in mindestens zwei Teile aufgeteilt wird und mindestens einer davon mit Füllstoff beladen wird, und dass das Mischungsverhältnis dieser Teile und damit der resultierende Füllstoffgehalt des fertigen Formteils eingestellt wird.

Dadurch wird erreicht, dass die Umstellung mehr oder weniger durch einfache Umschaltung erfolgen kann, indem bei beibehaltenem Polyol-Polyisocyanat-Rezepturverhältnis die zugeführten Anteile des Füllstoff-freien zum Füllstoff-haltigen Teil bzw. die zugeführten Anteile des ersten Füllstoff-haltigen Teils zum zweiten Füllstoff-haltigen Teil sinngemäß geändert werden.

Die chemische Rezeptur, d.h. das Mengenverhältnis der Reaktionskomponenten zueinander, bleibt bei einem Wechsel des Füllstoffgehaltes konstant. Stellt man nur einen Füllstoff-haltigen Komponententeil bereit, so sollte dieser mindestens dem maximal zu erwartenden Füllstoffgehalt im fertigen Formteil entsprechen, um alle Füllstoffgehalte bis zum eventuellen Maximalgehalt einstellen zu können. Hat man mit Füllstoff beladene Komponententeile, so muss die Beladung mit Füllstoff unterschiedlich sein. Ein Teil sollte einen hohen Füllstoffgehalt, der andere einen niedrigen Füllstoffgehalt aufweisen, um so den erwünschten Füllstoffgehalt im Formteil einstellen zu können.

Gemäß einer besonderen Durchführungsform des neuen Verfahrens werden mindestens zwei in unterschiedlicher Menge mit Füllstoff beladene Teile einer gleichartigen Reaktionskomponente zur Verarbeitung bereitgestellt bzw. verarbeitet.

Es besteht auch die Möglichkeit, von beiden der Reaktionskomponenten je einen Füllstoff-freien Teil und je einen Füllstoff-haltigen Teil zur Verarbeitung bereitzustellen bzw. zu verarbeiten.

Es versteht sich, dass mindestens eine der Reaktionskomponenten auch in mehr als zwei Teile aufteilbar ist, wobei mindestens zwei Teile mit Füllstoff beladen sind. Dies ist aber in der Regel nicht erforderlich und apparativ viel zu aufwendig.

Vorzugsweise werden als Füllstoff Fasern verwendet, und zwar gegebenenfalls mineralische Fasern, wie Glasfasern; Kunststofffasern, wie Polyamid-Fasern, oder Naturfasern, wie Jute- oder Hanffasern.

Als Füllstoffe können auch die üblichen in körniger Form, wie Recyclate, oder in pulvriger Form, wie Melamin oder Kreide, eingesetzt werden.

Die neue Vorrichtung zum Herstellen von Füllstoff-haltigen Formteilen aus einem fließfähigen Reaktionsgemisch geht aus von mindestens zwei Vorratsbehältern für fließfähige chemische Reaktionskomponenten, von denen mindestens eine mit Füllstoff beladen ist, wobei die Vorratsbehälter über Dosiervorrichtungen mit mindestens einer Mischvorrichtung verbunden sind, welche in ein Formwerkzeug öffnet.

Das Neue ist darin zu sehen, dass für mindestens eine der Reaktionskomponenten mindestens zwei Vorratsbehälter vorgesehen sind, wobei mindestens einer der beiden Teile dieser Reaktionskomponente mit Füllstoff beladen ist, und dass zwischen diesen beiden Vorratsbehältern und der mindestens einen Mischvorrichtung einstellbare Dosiereinrichtungen angeordnet sind.

In der Zeichnung ist die neue Vorrichtung zur Herstellung Füllstoff-haltiger Formteile aus Polyurethan durch Verwendung von Isocyanat und Polyol als Reaktionskomponenten in mehreren Ausführungsbeispielen in rein schematischer Ansicht dargestellt. Es zeigen:
- Fig. 1: eine erste Ausführungsform der Vorrichtung,
- Fig. 2: eine zweite Ausführungsform der Vorrichtung, und
- Fig. 3: eine Draufsicht auf die Mischvorrichtung und auf die in sie hineinführenden Leitungen für die gegebenenfalls mit Füllstoff beladenen Reaktionskomponenten.

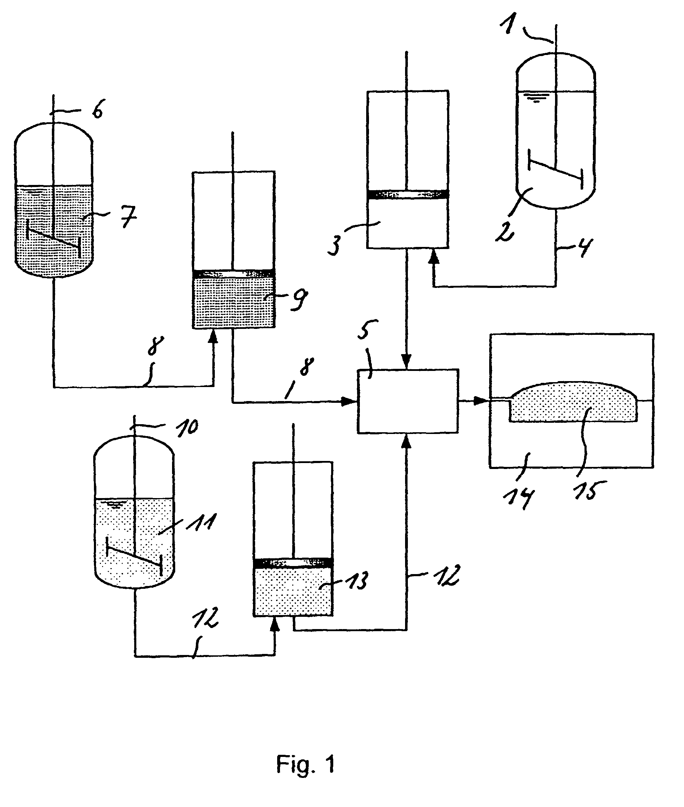

In Fig. 1 führt von einem mit einem Rührwerk 1 versehenen Vorratsbehälter 2 für Füllstoff-freies Isocyanat eine über ein Kolbendosiergerät 3 führende Leitung 4 und mündet in eine Mischvorrichtung 5. Von einem mit einem Rührwerk 6 versehenen Vorratsbehälter 7 für mit einem hohen Füllstoffanteil beladenen Polyol führt eine Leitung 8 über ein Kolbendosieraggregat 9 zur Mischvorrichtung 5. Von einem weiteren mit einem Rührwerk 10 versehenen Vorratsbehälter 11 für mit einem geringeren Füllstoffanteil beladenen Polyol führt eine Leitung 12 über ein Kolbendosiergerät 13 in die Mischvorrichtung 5. Die Mischvorrichtung 5 mündet in ein Formwerkzeug 14, in welchem ein Formteil 15 angedeutet ist. Ohne an der beschriebenen Vorrichtung etwas wesentlich zu verändern, ist alternativ der Vorratsbehälter 11 mit reinem Polyol gefüllt, und das im Vorratsbehälter 7 enthaltene Polyol ist mindestens mit dem höchsten zu erwartenden Füllstoffgehalt für das zu erzeugende Formteil 15 beladen.

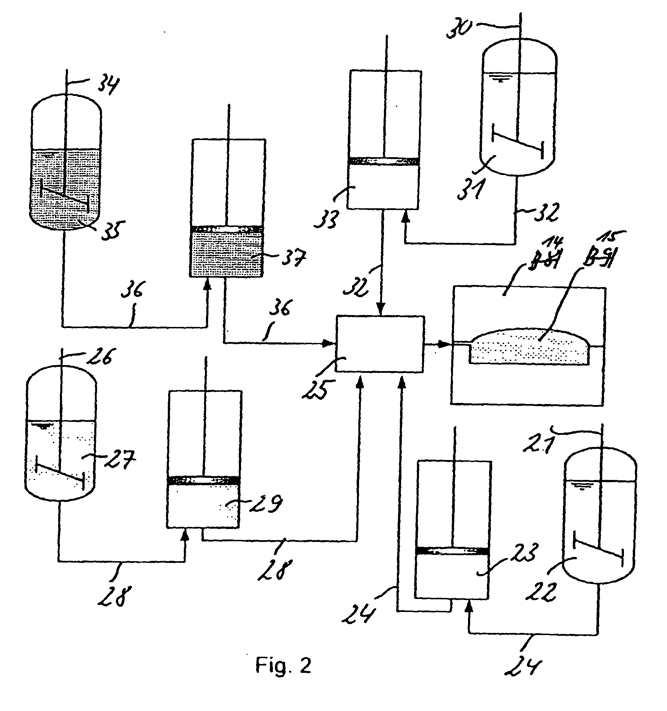

In Fig. 2 führt von einem mit einem Rührwerk 21 versehenen Vorratsbehälter 22 für Füllstoff-freies Isocyanat eine über ein Kolbendosiergerät 23 führende Leitung 24 und mündet in eine Mischvorrichtung 25. Von einem mit einem Rührwerk 26 versehenen Vorratsbehälter 27 für mit einem geringen Füllstoffanteil beladenen Isocyanat führt eine Leitung 28 über ein Kolbendosiergerät 29 in die Mischvorrichtung 25. Von einem mit einem Rührwerk 30 versehenen Vorratsbehälter 31 für Füllstoff-freies Polyol führt eine Leitung 32 über ein Kolbendosiergerät 33 zur Mischvorrichtung 25. Schließlich führt von einem mit einem Rührwerk 34 versehenen Vorratsbehälter 35 für mit einem hohen Füllstoffanteil beladenen Polyol eine Leitung 36 über ein Kolbendosiergerät 37 in die Mischvorrichtung 25. Die Mischvorrichtung 25 mündet in ein Formwerkzeug 14, in welchem ein Formteil 15 angedeutet ist. Auch bei dieser Ausführungsform lassen sich die Vorratsbehälter 22, 27, 31 und 34 je nach dem auszuübenden Verfahren andersartig befüllen, ohne dass sich der Aufbau der Vorrichtung im wesentlichen ändert.

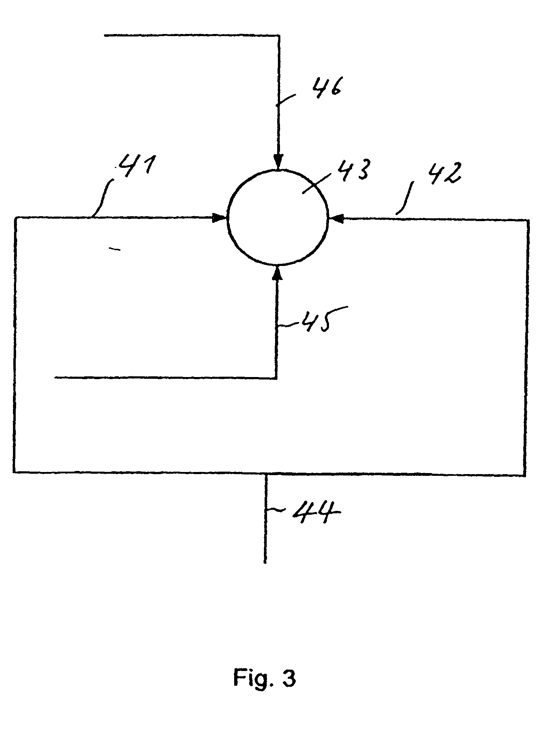

In Fig. 3 führen zwei Zuleitungen 41, 42 für Füllstoff-haltige Teile einer aus Polyol bestehenden Reaktionskomponente in eine Mischvorrichtung 43. Diese Zuleitungen 41, 42 werden aus der sich verzweigenden Leitung 44 gespeist und münden genau diametral in die Mischvorrichtung 43. Um 90° versetzt münden einander gegenüberliegend eine Zuleitung 45 für Füllstoff-freies Polyol und eine Zuleitung 46 für Füllstoff-freies Isocyanat ein. Es versteht sich, dass sich die Mischvorrichtung 43 entsprechend der gewählten Verfahrensweise über die Zuleitungen 41, 42, 45, 46 anderweitig beschicken lässt. Um nur eine Variante aufzuzeigen, lassen sich beispielsweise nur zwei Füllstoff-haltige Teile der gleichen Reaktionskomponente gegenüberliegend über die Zuleitungen 41, 42 einbringen, während die beiden anderen Zuleitungen 45, 46 mit der anderen, Füllstoff-freien Reaktionskomponente beschickt werden. Um eine besonders gute Vermischung zu erzielen, ist es vorteilhaft, wenn die Energie der Ströme in gegenüberliegenden Zuleitungen in der gleichen Größenordnung liegt.

Bei der Herstellung der Formteile muss die zu jedem Zeitpunkt in der Mischvorrichtung erzeugte Isocyanat-Polyol-Füllstoff-Mischung den geforderten Verhältnissen entsprechen. D.h., nicht nur die Mengenverhältnisse der einzelnen Komponenten in dem Formwerkzeug müssen genau stimmen. Die Verhältnisse der einzelnen Mengenströme zueinander müssen ebenfalls zu jedem Zeitpunkt eingehalten werden.

Mit der neuen Vorrichtung lassen sich u.a. folgende Verfahrensweisen durchführen:

### Beispiel 1

Die Vorrichtung gemäß Fig. 1 ist für die Fertigung eines Glas in Form von Fasern als Füllstoff enthaltenden Polyurethan-Formteils aus den Reaktionskomponenten Isocyanat und Polyol sowie Glas von 3.000 cm³ Gesamtvolumen eingestellt. Dabei beträgt der Glasgehalt 14 Gew.-% im fertigen Formteil. Die beiden Reaktionskomponenten werden im Massenverhältnis 100 : 170,9 zugeführt. Dabei ist die Polyolkomponente in einen Füllstoff-freien Teil und einen Füllstoff-haltigen Teil aufgeteilt. Das Massenverhältnis von Polyol zu Glas in der Füllstoff-haltigen Reaktionskomponente beträgt 100 : 80. Die Dichten der Reaktionskomponenten betragen 1,02 kg/l für das Polyol, 1,12 kg/l für das Isocyanat und 2,56 kg/l für das Glas. Daraus lässt sich die Dichte des Füllstoff-haltigen Polyols zu 1,392 kg/l errechnen. Gibt man eine Dosier-bzw. Einfüllzeit von 0,8 sec vor, so ergeben sich folgende Volumenströme:

| | |
|---|---|
| Isocyanat | 2.136,5 cm³/sec |
| Füllstoff-haltiges Polyol | 997,8 cm³/sec |
| Füllstoff-freies Polyol | 615,7 cm³/sec. |

Nun soll die Produktion so umgestellt werden, dass der Glasfasergehalt bei gleichem Formteilvolumen auf 22 Gew.-% erhöht wird. Auch hier müssen die Reaktionskomponenten im Massenverhältnis 100 : 170,9 zugeführt werden. Das Massenverhältnis von Polyol zu Glas in der Füllstoff-haltigen Komonente bleibt mit 100 : 80 ebenfalls konstant. Bei gleicher Dosier- bzw. Einfüllzeit von 0,8 sec errechnen sich bei dem Glasgehalt von 22 Gew.-% im fertigen Formteil folgende Volumenströme:

| | |
|---|---|
| Isocyanat | 2.040,3 cm³/sec |
| Füllstoff-haltiges Polyol | 1.651,0 cm³/sec |
| Füllstoff-freies Polyol | 58,7 cm³/sec. |

### Beispiel 2

Die Vorrichtung gemäß Fig. 1 ist für die Fertigung eines Glas in Form von Fasern als Füllstoff enthaltenden Polyurethan-Formteils aus den Reaktionskomponenten Isocyanat und Polyol sowie Glas von 3.000 cm³ Gesamtvolumen eingestellt. Dabei beträgt der Glasgehalt 14 Gew.-% im fertigen Formteil. Die beiden Reaktionskomponenten werden im Massenverhältnis 100 : 170,9 zugeführt. Dabei ist die Polyolkomponente aufgeteilt in einen Füllstoff-armen Teil, wobei dessen Massenanteile von Polyol zu Glas 100 : 40 betragen, sowie in einen Füllstoff-reichen Teil, wobei dessen Massenanteile von Polyol zu Glas 100 : 80 betragen. Die Dichten der reinen Reaktionskomponenten betragen 1,02 kg/l für das Polyol, 1,12 kg/l für das Isocyanat und 2,56 kg/l für das Glas. Damit ergeben sich die Dichten des Füllstoff-armen Polyols mit 1,232 kg/l und die des Füllstoff-reichen Polyols mit 1,392 kg/l. Wird eine Dosier-bzw. Einfüllzeit von 0,8 sec vorgegeben, so errechnen sich folgende Volumenströme:

| | |
|---|---|
| Isocyanat | 2.136,5cm³/sec |
| Füllstoff-reiches Polyol | 185,8 cm³/sec |
| Füllstoff-armes Polyol | 1.427,7 cm³/sec. |

Soll der Glasanteil des Formteils auf 22 Gew.-% bei sonst gleich bleibenden Randbedingungen gesteigert werden, errechnen sich folgende Volumenströme:

| | |
|---|---|
| Isocyanat | 2.040,3 cm³/sec |
| Füllstoff-reiches Polyol | 1.573,6 cm³/sec |
| Füllstoff-armes Polyol | 136,0 cm³/sec. |

### Beispiel 3

Die Vorrichtung gemäß Fig. 1 ist für die Fertigung eines Glas in Form von Fasern als Füllstoff enthaltenden Polyurethan-Formteils aus den Reaktionskomponenten Isocyanat und Polyol sowie Glas von 3.000 cm³ Gesamtvolumen eingestellt. Dabei beträgt der Glasgehalt 30 Gew.-% im fertigen Formteil. Die beiden Reaktionskomponenten werden im Massenverhältnis 100 : 170,9 zugeführt. Dabei ist die Polyolkomponente in einen Füllstoff-freien Teil und einen Füllstoff-haltigen Teil aufgeteilt. Das Massenverhältnis von Polyol zu Glas in der Füllstoff-haltigen Reaktionskomponente beträgt 100 : 80. Das Isocyanat enthält ebenfalls Füllstoff. Das Massenverhältnis von Isocyanat zu Glas beträgt 100 : 60. Die Dichten der reinen Reaktionskomponenten betragen 1,02 kg/l für das Polyol, 1,12 kg/l für das Isocyanat sowie 2,56 kg/l für das Glas. Daraus lässt sich die Dichte des Füllstoff-haltigen Polyols zu 1,392 kg/l errechnen. Die Dichte des Füllstoff-haltigen Isocyanats errechnet sich zu 1,419 kg/l. Gibt man eine Dosier- bzw. Einfüllzeit von 0,8 sec vor, so ergeben sich folgende Volumenströme:

| | |
|---|---|
| Füllstoff-haltiges Isocyanat | 2.441,0 cm³/sec |
| Füllstoff-haltiges Polyol | 277,5 cm³/sec |
| Füllstoff-freies Polyol | 1.031,6 cm³/sec. |

Soll nun der Glasanteil des fertigen Formteils bei sonst gleich bleibenden Bedingungen auf 38 Gew.-% gesteigert werden, so müssen folgende Volumenströme eingestellt werden:

| | |
|---|---|
| Füllstoff-haltiges Isocyanat | 2.290,1 cm³/sec |
| Füllstoff-haltiges Polyol | 1.219,6 cm³/sec |
| Füllstoff-freies Polyol | 240,4 cm³/sec. |

### Beispiel 4

Die Vorrichtung gemäß Fig. 2 ist für die Fertigung eines Glas in Form von Fasern als Füllstoff enthaltenden Polyurethan-Formteils aus den Reaktionskomponenten Isocyanat und Polyol sowie Glas von 3.000 cm³ Gesamtvolumen eingestellt. Dabei beträgt der Glasgehalt 30 Gew.-% im fertigen Formteil. Die beiden Reaktionskomponenten werden im Massenverhältnis 100 : 170,9 zugeführt. Dabei ist die Polyolkomponente in einen Füllstoff-freien Teil und einen Füllstoff-haltigen Teil aufgeteilt. Das Massenverhältnis von Polyol zu Glas in der Füllstoff-haltigen Reaktionskomponente beträgt 100 : 80. Die Isocyanatkomponente ist ebenfalls in einen Füllstoff-freien und einen Füllstoff-haltigen Teil aufgeteilt. Das Massenverhältnis von Isocyanat und Glas beträgt im Füllstoff-haltigen Teil 100 : 60. Die Dichten der reinen Reaktionskomponenten betragen 1,02 kg/l für das Polyol, 1,12 kg/l für das Isocyanat und 2,56 kg/l für das Glas. Daraus lässt sich die Dichte des Füllstoff-haltigen Polyols zu 1,392 kg/l errechnen. Die Dichte des Füllstoff-haltigen Isocyanats lässt sich zu 1,493 kg/l errechnen. Gibt man eine Dosier- bzw. Einfüllzeit von 0,8 sec vor, so ergeben sich folgende Volumenströme:

| | |
|---|---|
| Füllstoff-haltiges Isocyanat | 1.958,0 cm³/sec |
| Füllstoff-freies Isocyanat | 483,4 cm³/sec |
| Füllstoff-haltiges Polyol | 277,5 cm³/sec. |
| Füllstoff-freies Polyol | 1.031,6 cm³/sec. |

Soll der Glasgehalt im fertigen Formteil bei sonst gleich bleibenden Bedingungen auf 38 Gew.-% gesteigert werden, so müssen folgende Volumenströme eingestellt werden.

| | |
|---|---|
| Füllstoff-haltiges Isocyanat | 1.837,0 cm³/sec |
| Füllstoff-freies Isocyanat | 453,5 cm³/sec |
| Füllstoff-haltiges Polyol | 1.219,6 cm³/sec |
| Füllstoff-freies Polyol | 240,4 cm³/sec. |

## Patentansprüche

1. Verfahren zum Herstellen von Füllstoff-haltigen Formteilen aus einem fließfähigen Reaktionsgemisch, indem mindestens zwei fließfähige chemische Reaktionskomponenten, von denen mindestens eine Füllstoff enthält, durch Vermischung zur Reaktion gebracht werden, wobei das fließfähige Reaktionsgemisch in ein Formwerkzeug eingebracht wird, dort ausreagiert, und wobei das Formteil anschließend entformt wird, **dadurch gekennzeichnet, dass** mindestens eine der Reaktionskomponenten in mindestens zwei Teile aufgeteilt wird und mindestens einer davon mit Füllstoff beladen wird und dass das Mischungsverhältnis dieser Teile und damit der Füllstoffgehalt des fertigen Formteils eingestellt wird.

2. Verfahren nach Anspruch 1, **dadurch gekennzeichnet, dass** mindestens zwei in unterschiedlicher Menge mit Füllstoff beladene Teile einer gleichartigen Reaktionskomponente zur Verarbeitung bereitgestellt bzw. verarbeitet werden.

3. Verfahren nach Anspruch 1 oder 2, **dadurch gekennzeichnet, dass** von beiden der Reaktionskomponenten je ein Füllstoff-freier Teil und je ein Füllstoff-haltiger Teil zur Verarbeitung bereitgestellt und verarbeitet werden.

4. Verfahren nach den Ansprüchen 1, 2 oder 3, **dadurch gekennzeichnet, dass** als Füllstoffe Fasern verwendet werden.

5. Verfahren nach Anspruch 4, **dadurch gekennzeichnet, dass** als Fasern Glasfasern oder Naturfasern, wie Jute- oder Hanffasern, verwendet werden.

6. Vorrichtung zum Herstellen von Füllstoff-haltigen Formteilen (15) aus einem fließfähigen Reaktionsgemisch, bestehend aus mindestens zwei Vorratsbehältern (2, 7, 11; 22, 27, 31, 35) für fließfähige chemische Reaktionskomponenten, von denen mindestens eine mit Füllstoff beladen ist, wobei die Vorratsbehälter (2, 7, 11; 22, 27, 31, 35) über Dosiervorrichtungen (3, 9, 13; 23, 29, 33, 37) mit mindestens einer Mischvorrichtung (5; 25; 43) verbunden sind, welche in ein Formwerkzeug (14) öffnet, **dadurch gekennzeichnet, dass** für mindestens eine der Reaktionskomponenten mindestens zwei Vorratsbehälter (2, 7, 11; 22, 27, 31, 35) vorgesehen sind, wobei mindestens einer der beiden Teile dieser Reaktionskomponente mit Füllstoff beladen ist, und dass zwischen diesen beiden Vorratsbehältern (2, 7, 11; 22, 27, 31, 35) und der mindestens einen Mischvorrichtung (5; 25; 43) einstellbare Dosiereinrichtungen (3, 9, 13; 23, 29, 33, 37) angeordnet sind.

## Claims

1. A process for the manufacture of filler-containing moulded parts from a free-flowing reaction mixture by causing at least two free-flowing chemical reaction components, at least one of which contains filler, to react by mixing, wherein the free-flowing reaction mixture is introduced into a mould where it reacts to completion and the moulded part is then removed from the mould, **characterised in that** at least one of the reaction components is divided into at least two parts and at least one of them is charged with filler and **in that** the mixing ratio of said parts and hence the filler content of the finished moulded part is adjusted.

2. A process according to claim 1, **characterised in that** at least two parts of the same type of reaction component charged with filler in different amounts are made available for processing or processed.

3. A process according to claim 1 or 2, **characterised in that** one filler-free part and one filler-containing part of each of the two reaction components are made available for processing or processed.

4. A process according to any one of claims 1, 2 or 3, **characterised in that** fibres are used as fillers.

5. A process according to claim 4, **characterised in that** glass fibres or natural fibres such as jute or hemp fibres are used as fibres.

6. A device for the manufacture of filler-containing moulded parts (15) from a free-flowing reaction mixture consisting of at least two storage vessels (2, 7, 11; 22, 27, 31, 35) for free-flowing chemical reaction components, at least one of which is charged with filler, the storage vessels (2, 7, 11; 22, 27, 31, 35) being connected via metering devices (3, 9, 13; 23, 29, 33, 37) to at least one mixing device (5; 25; 43) which opens into a mould (14), **characterised in that** at least two storage vessels (2, 7, 11; 22, 27, 31, 35) are provided for at least one of the reaction components, at least one of the two parts of said reaction component being charged with filler, and **in that** adjustable metering devices (3, 9, 13; 23, 29, 33, 37) are arranged between these two storage vessels (2, 7, 11; 22, 27, 31, 35) and the at least one mixing device (5; 25; 43).

## Revendications

1. Procédé pour fabriquer des pièces moulées contenant des matières de remplissage à partir d'un mélange de réaction susceptible de s'écouler, dans lequel au moins deux composants de réaction chimiques susceptibles de s'écouler, parmi lesquels au moins un contient une matière de remplissage, sont amenés par mélange à réagir, procédé dans lequel le mélange de réaction susceptible de s'écouler est amené dans un outil de moulage, où il achève sa réaction, et dans lequel la pièce moulée est ensuite démoulée, **caractérisé en ce qu'**au moins un des composants de réaction est réparti dans au moins deux pièces dont au moins une est chargée de matière de remplissage et **en ce que** le rapport de mélange de ces pièces, et de ce fait la teneur en matière de remplissage de la pièce moulée finie, est ajusté(e).

2. Procédé selon la revendication 1, **caractérisé en ce qu'**au moins deux pièces chargées de matière de remplissage en quantités différentes d'un composant de réaction de même nature sont préparées pour le traitement ou sont traitées.

3. Procédé selon l'une ou l'autre des revendications 1 et 2, **caractérisé en ce que**, parmi les deux composants de réaction, une pièce exempte de matière de remplissage et une pièce contenant de la matière de remplissage sont préparées chacune pour le traitement et sont traitées.

4. Procédé selon l'une des revendications 1, 2 ou 3, **caractérisé en ce que** des fibres sont utilisées comme matières de remplissage.

5. Procédé selon la revendication 4, **caractérisé en ce que** des fibres de verre ou des fibres naturelles, comme des fibres de jute ou de chanvre, sont utilisées comme fibres.

6. Dispositif pour fabriquer des pièces moulées (15) contenant des matières de remplissage, à partir d'un mélange de réaction susceptible de s'écouler, constitué d'au moins deux réservoirs (2, 7, 11 ; 22, 27, 31, 35) pour des composants de réaction chimiques susceptibles de s'écouler, parmi lesquels au moins un est chargé de matière de remplissage, procédé dans lequel les réservoirs (2, 7, 11 ; 22, 27, 31, 35) sont reliés via des dispositifs de dosage (3, 9, 13 ; 22, 29, 33, 37) à au moins un dispositif de mélange (5 ; 25 ; 43) qui s'ouvre dans un outil de moulage (14), **caractérisé en ce que** :
- au moins deux réservoirs (3, 11 ; 22, 27, 31, 35) sont prévus pour au moins un des composants de réaction, au moins une des deux parties de ces composants de réaction étant chargée de matière de remplissage ; et
- des dispositifs de dosage réglables (3, 9, 13 ; 22, 29, 33, 37) sont agencés entre ces deux réservoirs (2, 7, 11 ; 22, 27, 31, 35) et ledit au moins un dispositif de mélange (5 ; 25 ; 43).
